# EUROPÄISCHE PATENTSCHRIFT

(11) **EP 1 122 158 B1**
(45) Veröffentlichungstag und Bekanntmachung des Hinweises auf die Patenterteilung: **21.12.2005**
(21) Anmeldenummer: 00810095.0
(22) Anmeldetag: 04.02.2000
(51) Int. Cl.: B62K 13/02, B62K 27/12, B62K 15/00, B62K 9/00

(54) **Verbindungsstange zur Ankopplung eines Kinderfahrrades an ein Erwachsenenfahrrad**
Connecting rod for coupling a childs bicycle to an adults bicycle
Accouplement pour relier une bicyclette d'enfant à une bicyclette d'adulte

(43) Veröffentlichungstag der Anmeldung: 08.08.2001
(73) Patentinhaber: Scherrer, Anton, 8408 Winterthur (CH)
(72) Erfinder: Scherrer, Anton, 8408 Winterthur (CH)
(74) Vertreter: Breiter, Heinz

(56) Entgegenhaltungen:
- DE-U- 29 518 754
- US-A- 5 716 065
- US-A- 5 743 543
- US-A- 5 785 335
- US-A- 5 836 600

## Beschreibung

Die Erfindung betrifft eine Verbindungsstange zur Ankopplung eines Kinderfahrrades an ein Erwachsenenfahrrad nach dem Oberbegriff von Anspruch 1.

Bekannt sind sogenannte Anhängevelos, d.h. Kinderfahrräder, die über eine integral mit dem Rahmen verbundene Verbindungsstange über ein Kupplungselement an der Sattelstange eines Erwachsenenfahrrades befestigt werden. Ein derartiges Anhängevelo besteht somit aus dem Antriebsteil mit dem Hinterrad, wobei anstelle des Lenkteiles mit dem Vorderrad der Rahmen des Kinderfahrrades direkt in die Verbindungsstange übergeht. Die Lenkstange ist hierbei an der Verbindungsstange festgelegt.

Der Nachteil der vorbekannten Anhängevelos liegt darin, dass sie nur zur Ankopplung an ein Erwachsenenfahrrad vorgesehen sind und nicht in ein zweirädriges Kinderfahrrad umgebaut werden können. Dies bedeutet, dass bei einem Wechsel von einem Anhängevelo auf ein normales zweirädriges Kinderfahrrad die Neuanschaffung eines Kinderfahrrades mit entsprechend hohen Investitionskosten erforderlich ist.

Eine Verbindungsstange der eingangs genannten Art ist in US-A-5743543 offenbart. US-A-5785335 zeigt eine mit dem Antriebsteil eines Kinderfahrrades integrale Verbindungsstange. Aus US-A-5716065 ist eine an das Antriebsteil eines Kinderfahrrades klappbar angelenkte Verbindungsstange bekannt.

Der Erfindung liegt deshalb die Aufgabe zugrunde, eine einfache und praktikable Lösung vorzuschlagen, mit welcher ein Anhängevelo ohne hohe Investitionskosten zu einem zweirädrigen Kinderfahrrad umgerüstet werden kann und umgekehrt. Zur erfindungsgemässen Lösung der Aufgabe führt eine Verbindungsstange mit dem Merkmalen von Anspruch 1.

Das Ankopplungssystem eignet sich zur Umrüstung von klappbaren Kinderfahrrädem, deren Antriebsteil mit dem Lenkteil über ein Scharniergelenk verbunden ist. Hierzu ist die Verbindungsstange so ausgestaltet, dass das dritte Verbindungsteil dem zweiten Verbindungsteil des Lenkteiles entspricht, d.h. die Verbindungsstange tritt an die Stelle des Lenkteiles.

Grundsätzlich kann die Verbindungsstange über das Kupplungselement an jeder geeigneten Stelle am Erwachsenenfahrrad angekoppelt werden. Bevorzugt ist das Kupplungselement so ausgestaltet, dass es an einer Sattelstange des Erwachsenenfahrrades festlegbar ist. Bei einer anderen Verbindungsart ist das Kupplungselement so ausgestaltet, dass es an einen Fahrradgepäckträger angekoppelt werden kann.

Der Vorteil des erfindungsgemässen Ankopplungssystems gegenüber den herkömmlichen Anhängevelos ist offensichtlich. Die Verwendung eines in zwei Teile zerlegbaren bzw. klappbaren Kinderfahrrades in Verbindung mit der erfindungsgemäss angepassten Verbindungsstange beinhaltet sowohl ein Anhängevelo als auch ein selbständiges zweirädriges Kinderfahrrad, die auf einfache Weise durch Trennen und neu Zusammensetzen der miteinander zu verbindenden Scharnierteile mit wenigen Handgriffen umgerüstet werden können.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1 ein um ein Scharniergelenk klappbares Kinderfahrrad;
- Fig. 2 das Schamiergelenk von Fig. 1 in vergrösserter Darstellung;
- Fig. 3 eine Verbindungsstange;
- Fig. 4 das Antriebsteil des Kinderfahrrades von Fig. 1, angekoppelt über die Verbindungsstange von Fig. 3 an ein Erwachsenenfahrrad.

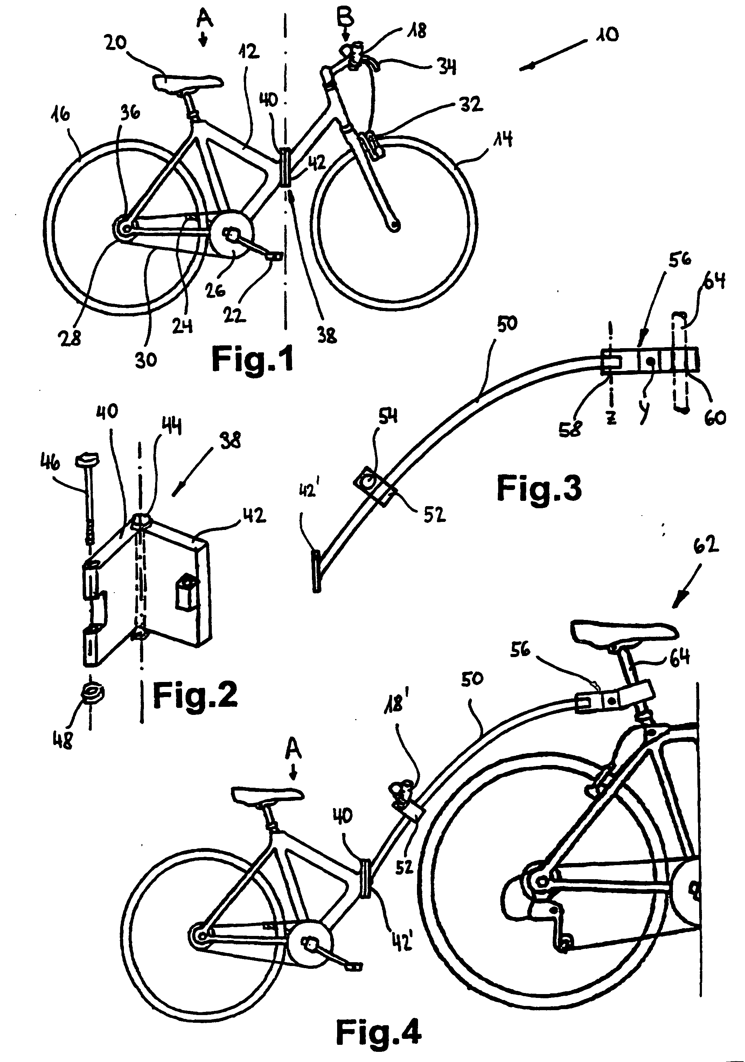

Ein handelsübliches zweirädriges Kinderfahrrad 10 umfasst gemäss Fig. 1 als wesentliche Funktionsteile einen Rahmen 12, ein Vorderrad 14, ein Hinterrad 16; eine Lenkstange 18, einen Sattel 20 sowie eine Antriebseinheit bestehend aus einem über Pedale 22, 24 angetriebenen Kettenblatt 26, welches mit einem Hinterrad-Zahnkranz 28 über eine Endloskette 30 verbunden ist. An der Lenkstange 18 befindet sich ein Bremshebel 34 zur Betätigung einer Vorderradbremse 32. Die Bremse für das Hinterrad 16 ist in die Hinterradnabe 36 integriert und mittels Rücktritt betätigbar.

Das Kinderfahrrad 10 ist über ein arretierbares Scharniergelenk 38 in ein hinteres Antriebsteil A und in ein vorderes Lenkteil B aufgetrennt und um eine Scharniergelenkachse a dreh- bzw. klappbar.

Wie in Fig. 2 gezeigt, weist das Scharniergelenk 38 eine erste Scharnierplatte 40, die am Antriebsteil A mit dem Rahmen 12 verschweisst ist, und eine zweite Scharnierplatte 42, die am Lenkteil B mit dem Rahmen 12 verschweisst ist, auf. Die beiden Scharnierplatten 40, 42 greifen längs einer Kante ineinander und sind in herkömmlicher Weise über einen Scharnierbolzen 44 verbunden und um diesen in der Scharniergelenkachse a drehbar gelagert. In Schliessstellung des Scharnieres, d.h. bei betriebsbereitem Fahrrad, greifen die beiden Scharnierplatten 40, 42 längs einer dem Scharnierbolzen 44 gegenüberliegenden Kante ineinander und sind von einem Sperrbolzen 46 durchsetzt, welcher mittels einer Mutter 48 gesichert ist.

Fig. 3 zeigt eine Verbindungsstange 50, an deren einem Ende eine mit der zweiten Scharnierplatte 42 identische Scharnierplatte 42' angeschweisst ist. An der Verbindungsstange 50 festgelegt ist eine Halterung 52 mit einer Durchführung 54 für eine in dieser klemmend montierbare Lenkstange. An dem der Scharnierplatte 42' entgegengesetzten Ende der Verbindungsstange 50 ist ein Kupplungselement 56 lösbar festgelegt. Dieses Kupplungselement 56 bietet einerseits eine Aufnahme 58 für die Verbindungsstange 50 und andererseits eine Durchführung 60 zur Befestigung des Kupplungselementes 56 an der Sattelstange 64 eines Erwachsenenfahrrades 62. Das Kupplungselement 56 beinhaltet eine im wesentlichen vertikale Gelenkachse z und eine im wesentlichen horizontale Gelenkachse y. Es ist ohne weiteres verständlich, dass die Befestigung der Verbindungsstange an einem Erwachsenenfahrrad über verschiedenartige, im Handel erhältliche Kupplungen möglich ist.

In Fig. 4 ist das Antriebsteil A des Kinderfahrrades 10 über das Schamiergelenk 38 mit der Verbindungsstange 50 fest verbunden. Das Schamiergelenk 38 wird hier von der Scharnierplatte 40 am Antriebsteil A und von der an der Verbindungsstange 50 angeordneten Scharnierplatte 42' gebildet. Die Verbindungsstange 50 ist ihrerseits über das Kupplungselement 56 an der Sattelstange 64 des Erwachsenenfahrrades 62 angekoppelt. In die Durchführung 54 der Halterung 52 ist eine Lenkstange 18' eingesetzt.

Aus den Fig. 1 bis 4 geht ohne weiteres hervor, dass der Antriebsteil A des Kinderfahrrades 10 durch Lösen und Wiedereinsetzen des Scharnierbolzens 44 am Scharniergelenk 38 mit wenigen Handgriffen durch das Lenkteil B ersetzt werden kann und umgekehrt.

## Patentansprüche

1. Verbindungsstange zur Ankopplung des Antriebsteils (A) eines über eine lösbare Verbindung (38) in ein Antriebsteil (A) mit einem ersten Verbindungsteil (40) und in ein Lenkteil (B) mit einem zweiten Verbindungsteil (42) aufteilbaren Kinderfahrrades (10) an ein Erwachsenenfahrrad (62), wobei das eine Ende der Verbindungsstange (50) mit einem dritten Verbindungsteil (42') ausgestattet ist, welches mit dem ersten Verbindungsteil (40) lösbar verbindbar ist, wobei das zweite Ende der Verbindungsstange (50) über ein Kupplungselement (56) mit dem Erwachsenenfahrrad (62) lösbar verbindbar ist, und wobei an der Verbindungstange (50) eine Lenkstange (18') festgelegt ist,
**dadurch gekennzeichnet, dass**
das dritte Verbindungsteil (42') als Scharnierteil zur Verbindung mit dem Antriebsteil (A) eines um ein Scharniergelenk (38) klappbaren Kinderfahrrades ausgebildet ist.

2. Verbindungsstange nach Anspruch 1, **dadurch gekennzeichnet, dass** das Kupplungselement (56) an einer Sattelstange (64) des Erwachsenenfahrrades (62) festlegbar ist.

3. Verbindungsstange nach Anspruch 1, **dadurch gekennzeichnet, dass** das Kupplungselement (56) an einem Fahrradgepäckträger des Erwachsenenfahrrades (62) festlegbar ist.

## Claims

1. Connecting rod for coupling the drive part (A) of a child's bicycle (10), which can be divided by way of a detachable connection (38) into a drive part (A) with a first connecting part (40) and a steering part (B) with a second connecting part (42), to an adult's bicycle (62), wherein the one end of the connecting rod (50) is equipped with a third connecting part (42') which can be detachably connected to the first connecting part (40), the second end of the connecting rod (50) being detachably connectable by way of a coupling element (56) to the adult's bicycle (62), and a handlebar (18') being fixed on the connecting rod (50), **characterised in that** the third connecting part (42') is configured as a hinge part for connection to the drive part (A) of a child's bicycle which can be folded about a hinge joint (38).

2. Connecting rod according to claim 1, **characterised in that** the coupling element (56) can be fixed to a saddle pillar (64) of the adult's bicycle (62).

3. Connecting rod according to claim 1, **characterised in that** the coupling element (56) can be fixed to a bicycle carrier of the adult's bicycle (62).

## Revendications

1. Barre de liaison pour accoupler l'ensemble d'entraînement (A) d'une bicylette d'enfant (10) - séparable par le biais d'une connexion amovible (38) en un ensemble d'entraînement (A) muni d'un premier élément de connexion (40) et un ensemble de guidage (B) muni d'un deuxième élément de connexion (42) - à une bicyclette d'adulte (62), dans laquelle barre de liaison (50) l'une des extrémités est équipée d'un troisième élément de connexion (42') qui peut être attaché, amovible, au premier élément de connexion (40), dans laquelle barre de liaison (50) la deuxième extrémité peut être attachée, amovible, à la bicyclette d'adulte (62) par le biais d'une pièce d'accouplement (56) et sur laquelle barre de liaison (50) est monté un guidon (18'), **caractérisée en ce que** le troisième élément de connexion (42') est réalisé en tant qu'élément de charnière pour être relié à l'ensemble d'entraînement (A) d'une bicyclette d'enfant pliante autour d'une articulation à charnière (38).

2. Barre de liaison selon la revendication 1, **caractérisée en ce que** la pièce d'accouplement (56) peut être fixée à une tige de selle (64) de la bicyclette d'adulte (62).

3. Barre de liaison selon la revendication 1, **caractérisée en ce que** la pièce d'accouplement (56) peut être fixée à un porte-bagages de la bicyclette d'adulte (62).
